# EUROPÄISCHE PATENTANMELDUNG

(11) **EP 3 859 084 A1**
(43) Veröffentlichungstag der Anmeldung: **04.08.2021**
(21) Anmeldenummer: 20154648.8
(22) Anmeldetag: 30.01.2020
(51) Int. Cl.: E01C 19/48, H02H 3/08

(54) **STROMVERSORGUNG EINER EINBAUGUT-HEIZUNG EINER STRASSENBAUMASCHINE**

(71) Anmelder: Joseph Vögele AG, 67067 Ludwigshafen (DE)
(72) Erfinder: HEINDTEL, Michael, 68199 Mannheim (DE); EUL, Achim, 68305 Mannheim (DE)
(74) Vertreter: Grünecker Patent- und Rechtsanwälte PartG mbB

(57) **Zusammenfassung**

Straßenbaumaschine bei der es sich um einen Straßenfertiger (1) oder um einen Beschicker (2) für einen Straßenfertiger handelt. Die Straßenbaumaschine umfasst elektrische Heizeinrichtungen (13) zum elektrischen Beheizen von Einbaugut. Ein elektrisches Leitungsnetz (11) der Straßenbaumaschine weist mehrere Phasen (L₁, L₂, L₃) zum Versorgen der elektrischen Heizeinrichtungen (13) mit elektrischer Leistung auf. Die Phasen (L₁, L₂, L₃) des elektrischen Leitungsnetzes (11) sind durch einen Leitungsschutzschalter (19) abgesichert. Die Straßenbaumaschine umfasst eine Auslöseanordnung (21). Die Auslöseanordnung (21) weist eine Kurzschlusseinrichtung (27), eine Strommesseinrichtung (23) und eine Steuereinrichtung (25) auf. Die Kurzschlusseinrichtung (27) ist dazu ansteuerbar, die Phasen (L₁, L₂, L₃) des elektrischen Leitungsnetzes (11) kurzzuschließen. Die Strommesseinrichtung (23) ist dazu konfiguriert, an den einzelnen Phasen (L₁, L₂, L₃) des elektrischen Leitungsnetzes (11) Strommessungen durchzuführen. Die Steuereinrichtung (25) ist dazu konfiguriert, basierend auf einem Ergebnis der Strommessungen die Kurzschlusseinrichtung (27) dazu anzusteuern, die Phasen (L₁, L₂, L₃) des elektrischen Leitungsnetzes (11) kurzzuschließen.

## Beschreibung

Die vorliegende Erfindung betrifft eine Straßenbaumaschine, bei der es sich um einen Straßenfertiger oder einen Beschicker für einen Straßenfertiger handeln kann, mit einer elektrischen Heizeinrichtungen für Einbaugut.

Bekannte Straßenfertiger umfassen bezüglich einer Einbaufahrtrichtung vorne am Zugfahrzeug des Straßenfertigers einen Gutbunker zur Aufnahme von Einbaugut. Von dem Gutbunker wird das Einbaugut während des Einbaus über eine geeignete Längsfördereinrichtung in einen hinteren Bereich des Straßenfertigers gefördert. Dort wird das Einbaugut mittels einer Verteilerschnecke quer zur Einbaufahrtrichtung verteilt und so gleichmäßig einer von dem Zugfahrzeug hinterher gezogenen Einbaubohle zum Verdichten des Einbauguts vorgelegt. Es ist bekannt, Arbeitskomponenten der Einbaubohle, wie beispielsweise Tamperleisten, Glättbleche und/oder Pressleisten, elektrisch oder mit Gas zu beheizen, um ein Ankleben des heißen Einbaumaterials an den Arbeitskomponenten zu verhindern. Im Falle einer elektrischen Beheizung sind in der Einbaubohle Widerstands-Heizelemente verteilt, die über einen an dem Zugfahrzeug vorgesehenen Drehstromgenerator mit Drehstrom versorgt werden.

In der EP 1 036 883 B1 wurde erkannt, dass ein permanentes Betreiben der elektrischen Heizelemente der Einbaubohle mit voller Leistung den Drehstromgenerator bei ungünstigen Betriebsbedingungen stark belastet und zudem eine geringe Energieeffizienz aufweisen kann. Um diese Probleme zu lösen, wird eine getaktete Schaltung der elektrischen Heizelemente der Einbaubohle vorgeschlagen. Mittels temperaturabhängiger Widerstände in den Wicklungen des Drehstromgenerators wird die Temperatur des Drehstromgenerators überwacht. Wenn die Temperatur des Generators einen bestimmten Schwellenwert überschreitet, wird der Betrieb der Heizelemente der Einbaubohle auf einen getakteten Betrieb umgestellt.

Die EP 3 527 721 beschreibt einen Straßenfertiger, an dessen Einbaubohle eine Mehrzahl von Widerstandsheizeinrichtungen zum elektrischen Beheizen der Einbaubohle vorgesehen sind. Eine Steuerung des Straßenfertigers steuert den einzelnen Widerstandsheizeinrichtungen zugeordnete Leistungsanpasser an, um die der jeweiligen Widerstandsheizeinrichtung zugeführte elektrische Leistung individuell dynamisch einzustellen. Durch die individuelle Einstellbarkeit der Widerstandsheizeinrichtungen lässt sich eine verbesserte Energieeffizienz der Bohlenheizung erreichen. Die Leistungsanpasser können beispielsweise Thyristorsteller umfassen. Das Leitungsnetz zum Versorgen der Widerstandsheizeinrichtungen mit von dem Generator des Straßenfertigers bereitgestellter elektrischer Leistung umfasst eine Hauptsicherung, die zwischen dem Generator und den Heizeinrichtungen geschaltet ist. Problematisch kann sein, dass in bestimmten Betriebssituationen bei einem Auftreten von Überströmen in dem Leitungsnetz die Hauptsicherung möglicherweise nicht schnell genug auslöst, um eine Beschädigung der Thyristorsteller zuverlässig zu verhindern.

Es ist Aufgabe der Erfindung, eine zuverlässige und wartungsarme Absicherung eines elektrischen Leitungsnetzes zum Versorgen einer elektrischen Einbaugut-Heizung eines Straßenfertigers oder eines Beschickers für einen Straßenfertiger anzugeben.

Diese Aufgabe wird durch eine Straßenbaumaschine gemäß Anspruch 1 und durch ein Verfahren gemäß Anspruch 11 gelöst. Die abhängigen Ansprüche geben vorteilhafte Ausführungsformen der Erfindung an.

Gemäß einem Aspekt betrifft die Erfindung eine Straßenbaumaschine. Bei der Straßenbaumaschine handelt es sich um einen Straßenfertiger oder um einen Beschicker für einen Straßenfertiger.

Die Straßenbaumaschine umfasst elektrische Heizeinrichtungen zum elektrischen Beheizen von Einbaugut. Die elektrischen Heizeinrichtungen können elektrische Widerstandsheizeinrichtungen umfassen. Die Straßenbaumaschine umfasst ein elektrisches Leitungsnetz, welches mehrere Phasen zum Versorgen der elektrischen Heizeinrichtungen mit elektrischer Leistung aufweist. Die Phasen des elektrischen Leitungsnetzes sind durch einen Leitungsschutzschalter abgesichert.

Die Straßenbaumaschine umfasst des Weiteren eine Auslöseanordnung mit einer Kurzschlusseinrichtung, einer Strommesseinrichtung und einer Steuereinrichtung. Die Kurzschlusseinrichtung ist dazu ansteuerbar, die Phasen des elektrischen Leitungsnetzes kurzzuschließen. Die Strommesseinrichtung ist dazu konfiguriert, an den einzelnen Phasen des elektrischen Leitungsnetzes Strommessungen durchzuführen. Die Steuereinrichtung ist dazu konfiguriert, basierend auf einem Ergebnis der Strommessungen die Kurschlusseinrichtung dazu anzusteuern, die Phasen des elektrischen Leitungsnetzes kurzzuschließen.

Die Auslöseanordnung ermöglicht es, abhängig von dem in den einzelnen Phasen des elektrischen Leitungsnetzes fließenden Strom aktiv einen Kurzschluss zwischen den Phasen des elektrischen Leitungsnetzes zu erzeugen. In Kombination mit der Absicherung des elektrischen Leitungsnetzes durch den Leitungsschutzschalter kann so eine besonders reaktionsschnelle Absicherung des elektrischen Leitungsnetzes erreicht werden. Es lässt sich wirkungsvoll eine Beschädigung der elektrischen Heizeinrichtungen oder eine Beschädigung von zwischen dem Leitungsschutzschalter und den elektrischen Heizeinrichtungen vorgesehenen Komponenten erreichen.

Das elektrische Leitungsnetz kann ein elektrisches Drehstromnetz sein. Die Phasen des elektrischen Leitungsnetzes können den Phasen L₁, L₂, L₃ des Drehstromnetzes entsprechen.

Die Straßenbaumaschine kann einen Generator zum Erzeugen der elektrischen Leistung zum Versorgen der elektrischen Heizeinrichtungen aufweisen. Der Generator kann von einem Antriebsaggregat der Straßenbaumaschine angetrieben werden. Das Antriebsaggregat kann beispielsweise einen Dieselmotor umfassen. Der Generator kann als Drehstromgenerator ausgebildet sein.

Der Leitungsschutzschalter kann dazu konfiguriert sein, auszulösen, wenn die Phasen des elektrischen Leitungsnetzes von der Kurzschlusseinrichtung kurzgeschlossen werden. Die Auslöseanordnung kann gewissermaßen durch Erzeugen eines künstlichen Kurzschlusses sicherstellen, dass der Leitungsschutzschalter schnell und zuverlässig auslöst.

Der Leitungsschutzschalter kann dazu konfiguriert sein, im Falle eines Kurzschlussstroms magnetisch auszulösen. Insbesondere kann der Leitungsschutzschalter dazu konfiguriert sein, magnetisch auszulösen, wenn die Phasen des elektrischen Leitungsnetzes von der Kurzschlusseinrichtung kurzgeschlossen werden. Ein magnetisches Auslösen des Leitungsschutzschalters im Falle eines Kurzschlusses hat eine besonders kurze Reaktionszeit und sorgt somit dafür, dass der Leitungsschutzschalter schnell auslöst, um Schäden an Komponenten entlang des Leitungsnetzes zu minimieren.

Der Leitungsschutzschalter kann dazu konfiguriert sein, im Falle von Überstrom durch eine Erwärmung eines Bimetallstreifens durch den Überstrom auszulösen. Eine Auslösung des Leitungsschutzschalters durch eine Erwärmung des Bimetallstreifens kann eine längere Reaktionszeit haben als eine magnetische Auslösung des Leitungsschutzschalters. Die Auslösung durch eine Erwärmung des Bimetallstreifens kann vorgesehen sein, um auch dann eine Absicherung des elektrischen Leitungsnetzes zu gewährleisten, wenn die Auslöseanordnung ausfällt.

Die Steuereinrichtung kann dazu konfiguriert sein, bei einem schnellen Stromanstieg in einer der Phasen des elektrischen Leitungsnetzes die Kurzschlusseinrichtung dazu anzusteuern, die Phasen des elektrischen Leitungsnetzes kurzzuschließen. Ein schneller Stromanstieg in einer der Phasen kann als Indikator für das Vorliegen eines Problems angesehen werden. Das Kurzschließen der Phasen des elektrischen Leitungsnetzes im Falle eines schnellen Stromanstiegs in einer der Phasen und ein dadurch herbeigeführtes Auslösen des Leitungsschutzschalters kann Schäden im elektrischen System der Straßenbaumaschine verhindern. Insbesondere kann ein schneller Stromanstieg ein Indikator für das Vorliegen eines Kurzschlusses in dem elektrischen System der Straßenbaumaschine sein.

Die Steuereinrichtung kann dazu konfiguriert sein, Ergebnisse der Strommessungen durch die Strommesseinrichtung über die Zeit hinweg zu analysieren und so einen schnellen Stromanstieg in einer der Phasen des elektrischen Leitungsnetzes zu erkennen.

Beispielsweise kann die Steuereinrichtung bestimmen, dass ein schneller Stromanstieg vorliegt, wenn die Differenz zweier aufeinander folgender Strommessungen oder ein gemessener Stromunterschied zwischen zwei Zeitpunkten in einer der Phasen des elektrischen Leitungsnetzes größer als ein vorbestimmter Grenzdifferenzstrom ist. Um ein Kurzschließen der Phasen des elektrischen Leitungsnetzes durch die Kurzschlusseinrichtung im Falle eines einzelnen Messfehlers zu vermeiden, ist es auch denkbar, dass die Steuereinrichtung bei der Bewertung, ob ein schneller Stromanstieg in einer der Phasen vorliegt, Mittelungen mehrerer aufeinanderfolgender Messwerte oder Messperioden berücksichtigt.

Die Steuereinrichtung kann dazu konfiguriert sein, die Kurzschlusseinrichtung dazu anzusteuern, die Phasen des elektrischen Leitungsnetzes kurzzuschließen, wenn an einer der Phasen ein Strom detektiert wird, der einen vorbestimmten Grenzstrom überschreitet. Hierdurch kann sichergestellt werden, dass der Leitungsschutzschalter schnell auslöst, wenn in einer der Phasen des Leitungsnetzes ein Überstrom vorliegt. Der vorbestimmte Grenzstrom kann geeignet gewählt werden, um für die in dem elektrischen Leitungsnetz vorgesehenen Komponenten eine angemessene Schutzwirkung zu erreichen. Insbesondere kann der vorbestimmte Grenzstrom zwischen 20 A und 45 A, oder zwischen 25 A und 35 A, oder zwischen 30 A und 35 A liegen. Der vorbestimmte Grenzstrom kann beispielsweise 32 A betragen.

Zumindest einer der elektrischen Heizeinrichtungen kann in dem elektrischen Leitungsnetz ein Leistungsanpasser vorgeordnet sein. Der Leistungsanpasser kann dazu konfiguriert sein, eine der elektrischen Heizeinrichtung zugeführte elektrische Leistung einzustellen. Durch eine Einstellbarkeit der der elektrischen Heizeinrichtung zugeführten elektrischen Energie lässt sich die elektrischen Heizeinrichtung der jeweiligen Betriebssituation der Straßenbaumaschine angepasst betreiben. Durch die Kombination der Auslöseanordnung mit dem Leitungsschutzschalter ist die Gefahr einer Beschädigung des Leistungsanpassers durch einen Kurzschluss oder durch Überströme deutlich reduziert.

Der Leistungsanpasser kann ein Halbleiter-Schaltelement umfassen. Halbleiter-Schaltelemente können gegenüber Überströmen in dem Leitungsnetz besonders empfindlich sein und profitieren stark von der durch die Kombination der Auslöseanordnung mit dem Leitungsschutzschalter bereitgestellten Schutzfunktion. Beispielsweise kann ein Halbleiter-Schaltelement eines Leistungsanpassers einen Bipolartransistor, einen Bipolartransistor mit isolierter Gate-Elektrode, einen GTO-Thyristor, einen Feldeffekttransistor, einen Thyristor oder einen TRIAC umfassen. Das Halbleiter-Schaltelement kann ein stufenloses Einstellen der dem zugeordneten elektrischen Heizelement zugeführten elektrischen Leistung erlauben.

Die elektrischen Heizeinrichtungen können dem Leitungsschutzschalter nachgeordnet jeweils durch eine Sicherung abgesichert sein. Ein Nennstrom der dem Leitungsschutzschalter nachgeordneten Sicherungen kann kleiner sein als ein Nennstrom des Leitungsschutzschalters. Aufgrund der schnellen Auslösecharakteristik der Auslöseanordnung in Kombination mit dem Leitungsschutzschalter kann die durch die Auslöseanordnung und den Leitungsschutzschalter bereitgestellte Schutzwirkung vor einem Auslösen der Sicherung eintreten, sodass die Sicherung unter normalen Umständen selbst bei einem Überstrom nicht auslöst. Die Sicherung kann dazu konfiguriert sein, bei einem Überstrom später auszulösen als der Leitungsschutzschalter aufgrund des von der Auslöseanordnung erzeugten Kurzschlusses zwischen den Phasen des elektrischen Leitungsnetzes auslöst. Besonders vorteilhaft ist dies, wenn die Sicherungen als Schmelzsicherungen ausgebildet sind. Die Schmelzsicherungen können eine Fail-Safe-Lösung für ein Nicht-Auslösen der Auslöseanordnung oder des Leitungsschutzschalters darstellen. In einer Vielzahl von Betriebssituationen kann die Kombination aus der Auslöseanordnung und dem Leitungsschutzschalter jedoch einem Auslösen der Sicherung zuvorkommen, sodass ein häufiges Austauschen der Sicherung vermieden wird.

Bei der Straßenbaumaschine kann es sich um einen Straßenfertiger handeln. Der Straßenfertiger kann ein Zugfahrzeug mit einem in Einbaufahrtrichtung vorne gelegenen Gutbunker zur Aufnahme von Einbaugut umfassen. Der Straßenfertiger kann zudem eine hinter dem Zugfahrzeug hergezogene Einbaubohle zum Verdichten von Einbaugut umfassen. Die elektrischen Heizeinrichtungen können an der Einbaubohle vorgesehen sein.

Vorzugsweise sind der Leitungsschutzschalter und die Auslöseanordnung an dem Zugfahrzeug des Straßenfertigers angeordnet. Beispielsweise können der Leitungsschutzschalter und die Auslöseanordnung leicht zugänglich in einem Schaltschrank des Straßenfertigers vorgesehen sein.

Die Erfindung betrifft auch ein Verfahren zum Absichern eines elektrischen Leitungsnetzes einer Straßenbaumaschine. Die beschriebene Straßenbaumaschine kann zum Durchführen des Verfahrens geeignet, ausgelegt und/oder konfiguriert sein. In Bezug auf die Straßenbaumaschine beschriebene Merkmale lassen sich auf das Verfahren übertragen und umgekehrt.

Das Verfahren betrifft ein Absichern eines elektrischen Leitungsnetzes einer Straßenbaumaschine. Bei der Straßenbaumaschine kann es sich um einen Straßenfertiger oder um einen Beschicker für einen Straßenfertiger handeln. Das elektrische Leitungsnetz umfasst mehrere Phasen zum Versorgen von an der Straßenbaumaschine zum Beheizen von Einbaugut vorgesehenen elektrischen Heizeinrichtungen mit elektrischer Leistung. Das Verfahren umfasst das Absichern der Phasen des elektrischen Leitungsnetzes durch einen Leitungsschutzschalter. Zudem umfasst das Verfahren das Durchführen von Strommessungen an den einzelnen Phasen des elektrischen Leitungsnetzes. Abhängig von dem Ergebnis der Strommessungen wird verfahrensgemäß der Leitungsschutzschalter durch aktives Kurzschließen der Phasen des elektrischen Leitungsnetzes ausgelöst.

Vorzugsweise wird der Leitungsschutzschalter magnetisch ausgelöst, wenn die Phasen des elektrischen Leitungsnetzes kurzgeschlossen werden. Hierdurch können besonders schnelle Reaktionszeiten erreicht werden.

Wenn bei den Strommessungen ein schneller Stromanstieg in einer der Phasen des elektrischen Leitungsnetzes detektiert wird, können die Phasen des elektrischen Leitungsnetzes aktiv kurzgeschlossen werden. Hierdurch kann insbesondere eine Schutzfunktion gegenüber einem Kurschluss in dem Leitungsnetz erreicht werden.

Wenn bei den Strommessungen in einer der Phasen des elektrischen Leitungsnetzes ein Strom detektiert wird, der einen vorbestimmten Grenzstrom überschreitet, können die Phasen des elektrischen Leitungsnetzes aktiv kurzgeschlossen werden. Hierdurch kann ein Überstromschutz in dem Leitungsnetz bereitgestellt werden.

Die elektrischen Heizeinrichtungen können dem Leitungsschutzschalter nachgeordnet jeweils durch eine Sicherung abgesichert werden. Bei der Sicherung kann es sich um eine Schmelzsicherung handeln. Die Sicherung kann eine Fail-Safe-Funktion bereitstellen.

Im Folgenden wird die Erfindung anhand von Ausführungsbeispielen unter Bezugnahme auf die Figuren weiter erläutert. Es zeigt
- Fig. 1: eine schematische Seitenansicht eines Straßenfertigers gemäß einer Ausführungsform;
- Fig. 2: eine schematische Seitenansicht eines Beschickers für einen Straßenfertiger gemäß einer Ausführungsform; und
- Fig. 3: eine schematische Darstellung eines Systems zur Stromversorgung der Heizeinrichtungen für Einbaugut einer Straßenbaumaschine gemäß einer Ausführungsform.

Die Erfindung kann auf einen Straßenfertiger 1 oder einen Beschicker 2 für einen Straßenfertiger angewandt werden.

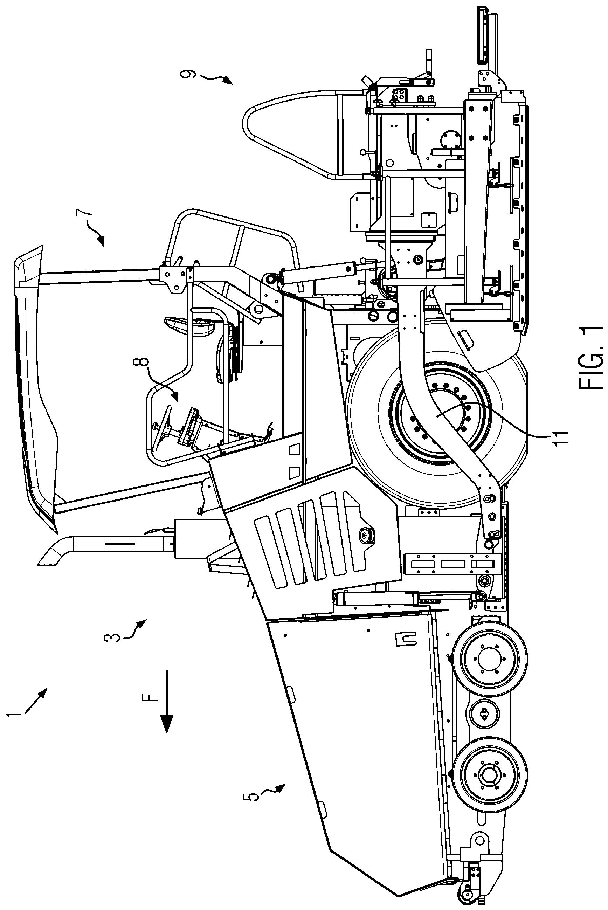

Figur 1 zeigt eine Ausführungsform einer Straßenbaumaschine, bei der es sich um einen Straßenfertiger 1 handelt. Der Straßenfertiger 1 umfasst ein selbstfahrendes Zugfahrzeug 3 mit einem in Einbaufahrtrichtung F vorne liegenden Gutbunker 5 zur Aufnahme von Einbaugut. An dem Zugfahrzeug 3 ist zudem ein Bedienstand 7 vorgesehen, welcher Eingabeeinrichtungen 8 zum Steuern des Straßenfertigers 1 umfasst sowie Platz für eine Bedienperson bereitstellt. Eine Einbaubohle 9 zum Verdichten von Einbaugut wird über beidseitig an dem Zugfahrzeug 3 angebrachte Zugholme 11 hinter dem Zugfahrzeug 3 hergezogen. An dem Zugfahrzeug 3 ist eine Fördereinrichtung zum Fördern von Einbaugut von dem Gutbunker 5 in einen hinteren Bereich des Straßenfertigers 1 vorgesehen. Im hinteren Bereich des Straßenfertigers 1 verlässt das Einbaumaterial die Fördereinrichtung durch einen Materialauslass und gelangt zu einer Querverteilereinrichtung zum Verteilen des Einbauguts vor der Einbaubohle 9 quer zur Einbaufahrtrichtung F. An der Einbaubohle 9 sind elektrische Heizelemente 13 zum Beheizen von Einbaugut vorgesehen. Die elektrischen Heizelemente 13 können beispielsweise an einem Bohlengrundkörper der Einbaubohle 9 oder an Tamperleisten, Glättblechen oder Pressleisten der Einbaubohle 9 vorgesehen sein

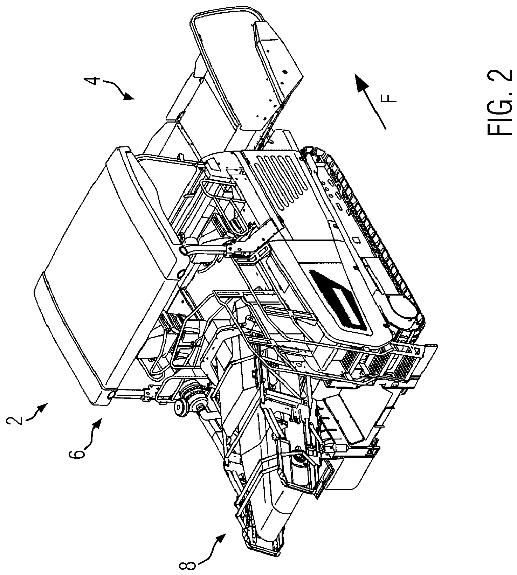

Figur 2 zeigt eine Ausführungsform einer Straßenbaumaschine, bei der es sich um einen Beschicker 2 für einen Straßenfertiger handelt. Der Beschicker 2 umfasst einen in Einbaufahrtrichtung F vorne gelegenen Gutbunker 4 zur Aufnahme von Einbaugut. Der Beschicker 2 umfasst einen Bedienstand 6, welcher Eingabeeinrichtungen zum Steuern des Beschickers 2 umfasst sowie Platz für eine Bedienperson bereitstellt. In Fahrtrichtung F hinten an dem Beschicker 2 ist eine Fördereinrichtung 8 zum Fördern von Einbaugut vorgesehen. Im Einbaubetrieb fährt der Beschicker 2 vor einem Straßenfertiger 1 her und versorgt den Straßenfertiger 1 über die Fördereinrichtung 8 des Beschickers 2 mit Einbaugut. Das Einbaugut kann mittels der Fördereinrichtung 8 des Beschickers 2 in einen Gutbunker 5 eines hinterherfahrenden Straßenfertigers 1 gefördert werden. An dem Beschicker 2 sind elektrische Heizeinrichtungen 13 zum Beheizen des Einbauguts vorgesehen. Die elektrischen Heizeinrichtungen könnten beispielsweise an dem Gutbunker 4 oder an der Fördereinrichtung 8 vorgesehen sein.

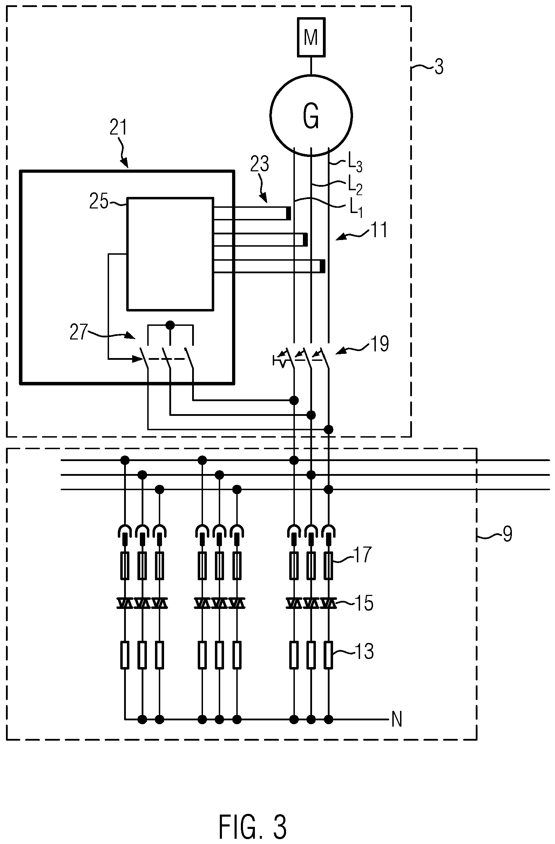

Figur 3 zeigt eine schematische Darstellung eines Systems zur Stromversorgung der Heizeinrichtungen 13. Für den Fall, dass es sich bei der Straßenbaumaschine um einen Straßenfertiger 1 handelt, ist in Figur 3 mit gestrichelten Kästchen eine bevorzugte Aufteilung der Komponenten zwischen dem Zugfahrzeug 3 und der Einbaubohle 9 dargestellt. Für den Fall, dass es sich bei der Straßenbaumaschine um einen Beschicker 2 handelt, können die gestrichelten Kästchen 3 und 9 in Figur 3 ignoriert werden.

Wie in Figur 3 dargestellt, umfasst die Straßenbaumaschine einen Generator G, welcher im Falle eines Straßenfertigers 1 an dem Zugfahrzeug 3 vorgesehen ist. In der gezeigten Ausführungsform ist der Generator G als Drehstromgenerator ausgebildet. Der Generator G wird von einem Antriebsaggregat M der Straßenbaumaschine angetrieben, welches beispielsweise einen Dieselmotor umfassen kann.

Der Generator G stellt einem elektrischen Leitungsnetz 11 Drehstrom zur Verfügung. Das elektrische Leitungsnetz 11 umfasst drei Phasen L₁, L₂, L₃. Die drei Phasen L₁, L₂, L₃ des Leitungsnetzes 11 werden im Falle eines Straßenfertigers 1 auf die Einbaubohle 9 geführt. Das Leitungsnetz 11 verzweigt zur Versorgung einzelner elektrischer Heizeinrichtungen 13. Im Falle eines Straßenfertigers 1 kann das Leitungsnetz 11 auf der Einbaubohle 9 verzweigen. Die elektrischen Heizeinrichtungen 13 können als Widerstandsheizeinrichtungen ausgebildet sein. In der dargestellten Ausführungsform werden von jeder der drei Phasen L₁, L₂, L₃ des elektrischen Leitungsnetzes 11 jeweils drei elektrische Heizeinrichtungen 13 mit Strom versorgt. Es wäre natürlich denkbar, eine beliebige andere Anzahl von Heizeinrichtungen 13 vorzusehen. Die von einer der Phasen L₁, L₂, L₃ des elektrischen Leitungsnetzes 11 versorgten elektrischen Heizeinrichtungen 13 sind zueinander parallelgeschaltet.

Jeder der elektrischen Heizeinrichtungen 13 ist in der dargestellten Ausführungsform ein Leistungsanpasser 15 vorgeschaltet. Die Leistungsanpasser 15 sind dazu konfiguriert, die der jeweils nachgeschalteten elektrischen Heizeinrichtung 13 zugeführte elektrische Leistung einzustellen. Insbesondere können die Leistungsanpasser 15 ermöglichen, die den elektrischen Heizeinrichtungen 13 zugeführte elektrische Leistung unabhängig voneinander dynamisch einzustellen. Vorzugsweise ist über die Leistungsanpasser 15 ein stufenloses Einstellen der der jeweils zugeordneten elektrischen Heizeinrichtung 13 zugeführten elektrischen Leistung möglich. Die Leistungsanpasser 15 können von einer Steuereinrichtung der Straßenbaumaschine angesteuert werden, beispielsweise über nicht dargestellte Steuerleitungen, über eine Funkverbindung oder über eine Powerline-Kommunikation, welche auf das elektrische Leitungsnetz 11 aufgeschaltet ist. Über die Leistungsanpasser 15 lässt sich die Betriebsleistung der elektrischen Heizeinrichtungen 13 geeignet an eine momentane Betriebssituation der Straßenbaumaschine anpassen.

Jeder der elektrischen Heizeinrichtungen 13 ist zudem noch eine als Schmelzsicherung ausgebildete Sicherung 17 zugeordnet, die die elektrische Heizeinrichtung 13 und den zugeordneten Leistungsanpasser 15 absichert.

Die drei Phasen L₁, L₂, L₃ des Leitungsnetzes 11 sind durch einen Leitungsschutzschalter 19 abgesichert. Im Falle eines Straßenfertigers 1 können die drei Phasen L₁, L₂, L₃ des Leitungsnetzes 11 an dem Zugfahrzeug 3 durch den Leitungsschutzschalter 19 abgesichert sein. In der dargestellten Ausführungsform ist der Leitungsschutzschalter 19 ein dreipoliger Leitungsschutzschalter 19. Der Leitungsschutzschalter 19 ist dazu konfiguriert, bei Auftreten eines Kurzschlussstroms in einer der Phasen L₁, L₂, L₃ des Leitungsnetzes 11 magnetisch auszulösen. Hierzu kann der Leitungsschutzschalter 19 Spulen umfassen, welche von den in den Phasen L₁, L₂, L₃ des Leitungsnetzes 11 fließenden Strömen durchflossen werden. Zudem ist kann der Leitungsschutzschalter 19 Bimetallstreifen umfassen, die sich aufgrund eines in einer der Phasen L₁, L₂, L₃ vorliegenden Überstroms erwärmen und dadurch auslösen. Ein Nennstrom des Leitungsschutzschalters kann beispielsweise 32 A betragen.

Die Nennströme der den einzelnen elektrischen Heizeinrichtungen 13 und den zugeordneten Leistungsanpassern 15 zugeordneten Sicherungen 17 können kleiner als der Nennstrom des Leitungsschutzschalters 19 sein. Beispielsweise kann ein Nennstrom der Sicherungen 17 jeweils 16 A betragen.

Im Falle eines Überstroms in einer der Phasen L₁, L₂, L₃ des Leitungsnetzes 11 würde normalerweise zuerst eine der Sicherungen 17 auslösen. Die als Schmelzsicherung ausgebildete Sicherung 17 müsste dann relativ aufwändig ersetzt werden. Um ein häufiges Ersetzen der Sicherungen 17 zu vermeiden, ist erfindungsgemäß eine Auslöseanordnung 21 vorgesehen, welche im Falle eines Überstroms auf eine spezielle Art und Weise für ein schnelles Auslösen des Leitungsschutzschalters 19 sorgt. Die Auslöseanordnung 21 kann im Falle eines Straßenfertigers 1 an dem Zugfahrzeug 3 angeordnet sein. Vorzugsweise sind die Auslöseanordnung 21 und der Leitungsschutzschalter 11 beide in einem Schaltschrank an dem Zugfahrzeug 3 angeordnet.

Die Auslöseanordnung 21 umfasst eine Strommesseinrichtung 23, die dazu konfiguriert ist, an den einzelnen Phasen L₁, L₂, L₃ des elektrischen Leitungsnetzes 11 Strommessungen durchzuführen. Wie in Figur 3 dargestellt, werden die Strommessungen in der gezeigten Ausführungsform zwischen dem Generator G und dem Leitungsschutzschalter 19 durchgeführt. Die Strommesseinrichtung 23 kann dazu konfiguriert sein, an jeder der drei Phasen L₁, L₂, L₃ des Leitungsstromnetzes 11 kontinuierlich oder periodisch Strommessungen durchzuführen. Ein Zeitabstand zwischen zwei aufeinander folgenden Strommessungen an einer Phase L₁, L₂, L₃ kann beispielsweise weniger als 40 ms oder weniger als 20 ms oder weniger als 10 ms oder weniger als 5 ms betragen. Ein kleiner Zeitabstand zwischen aufeinander folgenden Strommessungen oder eine kontinuierliche Strommessung kann zu einer verbesserten Reaktionszeit der Auslöseanordnung 21 führen. Die Ergebnisse der Strommessungen durch die Strommesseinrichtung 23 werden einer Steuereinrichtung 25 der Auslöseanordnung 21 zugeführt. Die Steuereinrichtung 25 kann als separate Steuereinrichtung ausgebildet oder Teil einer übergeordneten Steuereinrichtung des der Straßenbaumaschine sein. Die Steuereinrichtung 25 analysiert kontinuierlich die Ergebnisse der Strommessungen an den einzelnen Phasen L₁, L₂, L₃. Wenn die Steuereinrichtung 25 bei der Analyse der Ergebnisse der Strommessungen feststellt, dass an zumindest einer der Phasen L₁, L₂, L₃ des Leitungsnetzes 11 eine abnormale Situation vorliegt, steuert die Steuereinrichtung 25 eine Kurzschlusseinrichtung 27 der Auslöseanordnung 21 dazu an, die drei Phasen L₁, L₂, L₃ des Leitungsnetzes 11 zwischen dem Leitungsschutzschalter 19 und den Sicherungen 17 kurzzuschließen. Die daraufhin fließenden hohen Kurzschlussströme führen zu einem schnellen, magnetischen Auslösen des Leitungsschutzschalters 19.

Bedingungen für das Ansteuern der Kurzschlusseinrichtung 27 zum Erzeugen eines Kurzschlusses zwischen den Phasen L₁, L₂, L₃ des Leitungsstromnetzes 11 durch die Steuereinrichtung 25 können unterschiedlich gewählt werden. Es ist denkbar, eine oder mehr als eine hinreichende Bedingung für das Ansteuern der Kurzschlusseinrichtung 27 zum Erzeugen eines Kurzschlusses zwischen den Phasen L₁, L₂, L₃ des Leitungsnetzes 11 vorzusehen. Beispielsweise kann die Steuereinrichtung 25 einen zeitlichen Verlauf der Ergebnisse der Strommessungen in den einzelnen Phasen L₁, L₂, L₃ des Leitungsnetzes 11 analysieren. Wenn festgestellt wird, dass in einer der Phasen L₁, L₂, L₃ des elektrischen Leitungsnetzes 11 ein zu schneller Stromanstieg vorliegt, kann dies als Indiz für einen Kurzschluss in dem elektrischen Leitungsnetz 11 angesehen werden und die Kurzschlusseinrichtung 27 zum Erzeugen eines Kurzschlusses zwischen den Phasen L₁, L₂, L₃ angesteuert werden, um den Leitungsschutzschalter 19 auszulösen.

Zusätzlich oder alternativ kann die Steuereinrichtung 25 die Ergebnisse der Strommessungen an den einzelnen Phasen L₁, L₂, L₃ des elektrischen Leitungsnetzes 11 mit einem vorbestimmten Grenzstrom vergleichen. Es können sämtliche Messwerte der Strommessungen mit dem vorbestimmten Grenzstrom verglichen werden. Alternativ wäre es beispielsweise denkbar aus mehreren aufeinander folgenden Messergebnissen einer Phase L₁, L₂, L₃ einen Mittelwert zu bilden und diesen mit dem vorbestimmten Grenzstrom zu vergleichen. Ist das Ergebnis des Vergleichs, dass der Grenzstrom überschritten wird, kann dies als Indiz für einen Überstrom in der entsprechenden Phase L₁, L₂, L₃ des elektrischen Leitungsnetzes 11 angesehen werden und die Kurzschlusseinrichtung 27 zum Kurzschließen der Phasen L₁, L₂, L₃ des elektrischen Leitungsnetzes 11 angesteuert werden, sodass der Leitungsschutzschalter 19 ausgelöst wird. Der vorbestimmte Grenzstrom kann insbesondere dem Nennstrom des Leitungsschutzschalters 19 entsprechen. Ein denkbarer Wert für den vorbestimmten Grenzstrom wäre beispielsweise 32 A.

Die Auslöseanordnung 21 sorgt bei Auftreten eines irregulären Stroms in einer der Phasen L₁, L₂, L₃ des elektrischen Leitungsnetzes 11 durch Auslösen eines Kurzschlusses zwischen den Phasen L₁, L₂, L₃ des elektrischen Leitungsnetzes 11 für ein schnelles Auslösen des Leitungsschutzschalters 19. Hierdurch wird ein verbesserter Schutz der dem Leitungsschutzschalter 19 nachgeordneten Komponenten erreicht. Insbesondere die Leistungsanpasser 15 werden vor einer Zerstörung durch Überströme geschützt. Aufgrund der schnellen Auslösecharakteristik der Auslöseanordnung 21 kann zudem ein Durchbrennen der als Schmelzsicherungen ausgebildeten Sicherungen 17 verhindert werden und so Wartungsaufwand eingespart werden.

## Patentansprüche

1. Straßenbaumaschine, wobei
es sich bei der Straßenbaumaschine um einen Straßenfertiger (1) oder um einen Beschicker (2) für einen Straßenfertiger handelt;
die Straßenbaumaschine elektrische Heizeinrichtungen (13) zum elektrischen Beheizen von Einbaugut umfasst;
die Straßenbaumaschine ein elektrisches Leitungsnetz (11) umfasst, welches mehrere Phasen (L₁, L₂, L₃) zum Versorgen der elektrischen Heizeinrichtungen (13) mit elektrischer Leistung aufweist;
die Phasen (L₁, L₂, L₃) des elektrischen Leitungsnetzes (11) durch einen Leitungsschutzschalter (19) abgesichert sind; und
die Straßenbaumaschine eine Auslöseanordnung (21) umfasst, welche Folgendes aufweist:
eine Kurzschlusseinrichtung (27), welche dazu ansteuerbar ist, die Phasen (L₁, L₂, L₃) des elektrischen Leitungsnetzes (11) kurzzuschließen;
eine Strommesseinrichtung (23), welche dazu konfiguriert ist, an den einzelnen Phasen (L₁, L₂, L₃) des elektrischen Leitungsnetzes (11) Strommessungen durchzuführen; und
eine Steuereinrichtung (25), welche dazu konfiguriert ist, basierend auf einem Ergebnis der Strommessungen die Kurzschlusseinrichtung (27) dazu anzusteuern, die Phasen (L₁, L₂, L₃) des elektrischen Leitungsnetzes (11) kurzzuschließen.

2. Straßenbaumaschine nach Anspruch 1, wobei der Leitungsschutzschalter (19) dazu konfiguriert ist, auszulösen, wenn die Phasen (L₁, L₂, L₃) des elektrischen Leistungsnetzes (11) von der Kurzschlusseinrichtung (27) kurzgeschossen werden.

3. Straßenbaumaschine nach Anspruch 1 oder 2, wobei der Leitungsschutzschalter (19) dazu konfiguriert ist, im Falle eines Kurzschlussstroms magnetisch auszulösen.

4. Straßenbaumaschine nach einem der vorangehenden Ansprüche, wobei der Leitungsschutzschalter (19) dazu konfiguriert ist, im Falle von Überstrom durch eine Erwärmung eines Bimetallstreifens durch den Überstrom auszulösen.

5. Straßenbaumaschine nach einem der vorangehenden Ansprüche, wobei die Steuereinrichtung (25) dazu konfiguriert ist, bei einem schnellen Stromanstieg in einer der Phasen (L₁, L₂, L₃) des elektrischen Leitungsnetzes (11) die Kurzschlusseinrichtung (27) dazu anzusteuern, die Phasen (L₁, L₂, L₃) des elektrischen Leitungsnetzes (11) kurzzuschließen.

6. Straßenbaumaschine nach einem der vorangehenden Ansprüche, wobei die Steuereinrichtung (25) dazu konfiguriert ist, die Kurzschlusseinrichtung (27) dazu anzusteuern, die Phasen (L₁, L₂, L₃) des elektrischen Leitungsnetzes (11) kurzzuschließen, wenn in einer der Phasen (L₁, L₂, L₃) ein Strom detektiert wird, der einen vorbestimmten Grenzstrom überschreitet.

7. Straßenbaumaschine nach einem der vorangehenden Ansprüche, wobei zumindest einer der elektrischen Heizeinrichtungen (13) in dem elektrischen Leitungsnetz (11) ein Leistungsanpasser (15) vorgeordnet ist, welcher dazu konfiguriert ist, eine der elektrischen Heizeinrichtung (13) zugeführte elektrische Leistung einzustellen.

8. Straßenbaumaschine nach Anspruch 7, wobei der Leistungsanpasser (15) ein Halbleiter-Schaltelement umfasst, welches insbesondere einen Bipolartransistor, einen Bipolartransistor mit isolierter Gate-Elektrode, einen GTO-Thyristor, einen Feldeffekttransistor, einen Thyristor oder einen TRIAC umfassen kann.

9. Straßenbaumaschine nach einem der vorangehenden Ansprüche, wobei die elektrischen Heizeinrichtungen (13) dem Leitungsschutzschalter (19) nachgeordnet jeweils durch eine Sicherung (17), insbesondere eine Schmelzsicherung, abgesichert sind.

10. Straßenbaumaschine nach einem der vorangehenden Ansprüche, wobei es sich bei der Straßenbaumaschine um einen Straßenfertiger (1) mit einem Zugfahrzeug (3), das einen in Einbaufahrtrichtung (F) vorne gelegenen Gutbunker (5) zur Aufnahme von Einbaugut umfasst, und mit einer hinter dem Zugfahrzeug (3) hergezogenen Einbaubohle (9) zum Verdichten von Einbaugut handelt, und wobei die elektrischen Heizeinrichtungen (13) an der Einbaubohle (9) vorgesehen sind, wobei vorzugsweise der Leitungsschutzschalter (19) und die Auslöseanordnung (21) an dem Zugfahrzeug (3) angeordnet sind.

11. Verfahren zum Absichern eines elektrischen Leitungsnetzes (11) einer Straßenbaumaschine, wobei es sich bei der Straßenbaumaschine um einen Straßenfertiger (1) oder um einen Beschicker (2) für einen Straßenfertiger handelt, und wobei das elektrische Leitungsnetz (11) mehrere Phasen (L₁, L₂, L₃) zum Versorgen von an der Straßenbaumaschine zum Beheizen von Einbaugut vorgesehenen elektrischen Heizeinrichtungen (13) mit elektrischer Leistung umfasst, wobei das Verfahren Folgendes umfasst:
Absichern der Phasen (L₁, L₂, L₃) des elektrischen Leitungsnetzes (11) durch einen Leitungsschutzschalter (19);
Durchführen von Strommessungen an den einzelnen Phasen (L₁, L₂, L₃) des elektrischen Leitungsnetzes (11); und
abhängig von dem Ergebnis der Strommessungen Auslösen des Leitungsschutzschalters (19) durch aktives Kurzschließen der Phasen (L₁, L₂, L₃) des elektrischen Leitungsnetzes.

12. Verfahren nach Anspruch 11, wobei der Leitungsschutzschalter (19) magnetisch ausgelöst wird, wenn die Phasen (L₁, L₂, L₃) des elektrischen Leitungsnetzes (11) kurzgeschlossen werden.

13. Verfahren nach Anspruch 11 oder 12, wobei die Phasen (L₁, L₂, L₃) des elektrischen Leitungsnetzes (11) aktiv kurzgeschlossen werden, wenn bei den Strommessungen ein schneller Stromanstieg in einer der Phasen (L₁, L₂, L₃) des elektrischen Leitungsnetzes (11) detektiert wird.

14. Verfahren nach einem der Ansprüche 11 bis 13, wobei die Phasen (L₁, L₂, L₃) des elektrischen Leitungsnetzes (11) aktiv kurzgeschlossen werden, wenn bei den Strommessungen in einer der Phasen (L₁, L₂, L₃) des elektrischen Leitungsnetzes (11) ein Strom detektiert wird, der einen vorbestimmten Grenzstrom überschreitet.

15. Verfahren nach einem der Ansprüche 11 bis 14, wobei die elektrischen Heizeinrichtungen (13) dem Leitungsschutzschalter (19) nachgeordnet jeweils durch eine Sicherung (17), insbesondere eine Schmelzsicherung, abgesichert sind.
